# EUROPÄISCHE PATENTSCHRIFT

(11) **EP 1 280 710 B1**
(45) Veröffentlichungstag und Bekanntmachung des Hinweises auf die Patenterteilung: **28.11.2007**
(21) Anmeldenummer: 01925462.2
(22) Anmeldetag: 15.03.2001
(51) Int. Cl.: B65D 39/00, B29C 44/04

(54) **VERSCHLUSS FÜR FLASCHENARTIGE BEHÄLTNISSE SOWIE VERFAHREN ZU DESSEN HERSTELLUNG**
CLOSURE FOR BOTTLE-LIKE CONTAINERS AND METHOD FOR PRODUCTION THEREOF
FERMETURE POUR CONTENANTS DE TYPE BOUTEILLE, ET PROCEDE DE PRODUCTION DE LADITE FERMETURE

(30) Priorität: 15.03.2000 DE 10012394
(43) Veröffentlichungstag der Anmeldung: 05.02.2003
(73) Patentinhaber: Stieler, Ulrich, 38640 Goslar (DE)
(72) Erfinder: Stieler, Ulrich, 38640 Goslar (DE); Barlog, Werner, 51766 Engelskirchen (DE)
(74) Vertreter: Einsel, Martin
(86) Internationale Anmeldenummer: PCT/EP2001/002929
(87) Internationale Veröffentlichungsnummer: WO 2001/068466

(56) Entgegenhaltungen:
- DE-A- 2 503 230

## Beschreibung

Die vorliegende Erfindung betrifft ein Verfahren zur Herstellung eines Verschlusses für flaschenartige Behälter mittels Spritzgießverfahren oder Extrusionsverfahren sowie einen nach diesem Verfahren erhaltenen Verschluss.

Traditionelle Verschlüsse für flaschenartige Behälter wie Wein- oder Sektflaschen sind Korken, die aus der Rinde der Korkeiche gewonnen werden.

Der natürlich gewonnene Kork kann jedoch den drastisch gestiegenen Bedarf an derartigen Verschlüssen nicht decken.

So wird die Korkeiche nur in begrenzten Gebieten angebaut und wächst nur langsam, so dass Kork erstmals nach 25 Jahren gewonnen werden kann. Verursacht durch Mikroorganismen, Dünger etc. wird Kork unbrauchbar für Verschlüsse. Die übelriechenden Substanzen führen bei 5 % bis 10 % der Weinflaschen zu dem sogenannten "Korkgeschmack". Weltweit werden hierdurch ca. 800 Millionen Flaschen Wein ungenießbar.

Hochwertige und qualitativ einwandfreie Verschlüsse aus Naturkork sind daher vergleichsweise teuer und werden hochwertigen und folglich teuren Weinen oder Sekten vorbehalten.

Für weniger hochwertige Produkte besteht jedoch ein Bedarf an einer preiswerten und geschmacksneutralen Alternative zu den traditionellen Korkverschlüssen.

So wurden für Wein Drehverschlüsse aus Metall und für Sekt Korken aus Kunststoff, die profilierte Polyethylenstopfen sind, eingesetzt, die jedoch von den Verbrauchern nur bedingt angenommen worden sind und denen der Makel von Billigware anhaftet.

Es wurde nach einer Alternative gesucht, die in Aussehen und in der Anwendung, wie zum Beispiel Abfüllanlagen, Öffnen durch Korkenzieher, dem natürlichen Kork möglichst nahe kommen soll.

So wurde ein künstlicher Korken vorgeschlagen, der aus selektierten Korkanteilen und einem Polyurethanbinder mit Hilfe eines chemischen Treibmittels (Expancel, Marke der Firma Akzo Nobel aus Frankreich) hergestellt worden ist.

Weiter wurde vorgeschlagen, als Korkersatzmaterial chemisch geschäumtes Ethylen-Vinyl-Acetat zu verwenden, welches keine Duft- oder Geschmacksstoffe absondert (vertrieben von Novembal unter der Marke "Tage").

Bei den hier zum Einsatz kommenden chemischen Treibmitteln handelt es sich um Verbindungen, die dem zu schäumenden Material zugesetzt werden und aufgrund chemischer Reaktion unter Zersetzung und Freisetzung gasförmiger Stoffe expandieren und dabei das umgebende Material aufschäumen. Zur Zündung des chemischen Treibmittels muss für die Schäumung die Schmelze auf eine geeignete Initialtemperatur gebracht werden, die oftmals über der Temperatur liegt, die für die Verarbeitung der Schmelze erforderlich oder ideal ist. Durch die notwendige erhöhte Temperatur erhöht sich nicht nur der Energiebedarf, sondern es kann auch die optimale Verarbeitbarkeit beeinträchtigt werden.

Von Nachteil ist ferner, dass die Zersetzungsprodukte und Rückstände von chemischen Treibmitteln häufig nicht naturidentisch sind und daher, soweit sie im geschäumten Material verbleiben, aus lebensmitteltechnischen Gründen unerwünscht - da zum Beispiel nicht geschmacksneutral - oder gar aus gesundheitlichen Gründen bedenklich sind. In chemisch geschäumten Artikeln verbliebene ungezündete Treibmittel verhindern zudem ein Recycling des geschäumten Artikels, da die verbliebenen Treibmittel bei der Aufbereitung oder Wiederverwertung unkontrolliert zünden können, wodurch eine reproduzierbare Wiederverwertung unmöglich ist.

Von verfahrenstechnischer Seite ist von Nachteil, dass bei der Zersetzung chemischer Treibmittel Reaktionswärme frei wird, die zur Erhitzung des umgebenden Materials beiträgt, wodurch längere Zyklendauer für die Abkühlung und Erstarrung des Materials notwendig werden. Zudem muss ein chemisch geschäumter Artikel länger in der Form gehalten werden, um ein unerwünschtes Übermaß der Schäumung, das heißt eine sogenannte Nachblähung, aufgrund der hohen freiwerdenden Temperaturen zu vermeiden.

Bekannte Kunststoffstopfen weisen zudem eine unbefriedigende Dichtwirkung auf.

Eine Ursache hierfür ist, dass diese Korken aus sehr harten und kaum oder gar nicht nachgiebigen Materialien bestehen, die sich beim Einführen in einen Flaschenhals nicht ähnlich einem Naturkorken komprimieren lassen, die durch den dadurch ausgeübten Druck auf die Innenwände des Flaschenhalses an den Innenwänden eng anliegen und so einen dichten Verschluss gewährleisten.

Zur Lösung dieses Problems wird in der DE 198 49 149 A1 vorgeschlagen, Kunststoffstopfen für Flaschen und ähnliches aus Kunststoffschaum zur Verfügung zu stellen, wobei der Schaum an den Dichtflächen offenzellig und im Übrigen geschlossenzellig ausgebildet ist. Durch die Offenzelligkeit soll ein dichtes Abschließen der Dichtflächen mit der Innenwand des Flaschenhalses erzielt werden, indem die Zellenränder als Dichtlippen wirken. Als Materialbeispiel wird hier Polypropylen genannt.

Geschäumte künstliche Korken werden in US 5,904,965 sowie GB 2,040,889 beschrieben.

Die hier beschriebenen Korken weisen jedoch eine geschäumte Außenhaut auf. GB 1,333,587 beschreibt ein Spritzgussverfahren zur Herstellung von Gegenständen mit einer kompakten Außenhaut mit einem geschäumten Kern. Ein Hinweis, dieses Verfahren zur Herstellung von künstlichen Korken einzusetzen, findet sich jedoch nicht.

Es war Aufgabe der vorliegenden Erfindung, einen Ersatz für natürliche Korkverschlüsse zur Verfügung zu stellen sowie ein Verfahren, mit dem ein derartiger Korkersatz auf einfache Art und Weise unter Vermeidung der oben genannten Probleme hergestellt werden kann.

Die Aufgabe wird gelöst durch ein Verfahren zur Herstellung eines Verschlusses für flaschenartige Behältnisse, wobei der Verschluss durch Schäumen eines schäumbaren Materials, ausgewählt unter einem thermoplastischen Elastomer oder einem nachwachsenden, vorzugsweise biologisch abbaubaren Rohstoff, mittels eines physikalischen Treibmittels erhalten wird, wobei das Treibmittel ausgewählt ist unter Kohlendioxid, Stickstoff und Wasser, und der Verschluss eine ungeschäumte Außenhaut aus treibmittelfreiem Ausgangsmaterial und einen geschäumten geschlossenporigen Kern aufweist.

Als geeignete Herstellungsverfahren können das Spritzgießverfahren oder das Extrusionsverfahren eingesetzt werden.

Erfindungsgemäß wird die Schäumung durch ein physikalisches Treibmittel bewirkt. Die Treibwirkung von physikalischen Treibmitteln beruht auf der Expansion des eingesetzten Stoffes infolge eines Aggregatwechsels von beispielsweise flüssig zu gasförmig oder der Ausdehnung eines komprimierten Gases bei Entspannung.

Für das erfindungsgemäße Verfahren werden als physikalische Treibmittel Fluide eingesetzt, die keine bedenklichen Rückstände bilden. Es handelt sich hierbei um die naturidentischen Verbindungen Kohlendioxid, Stickstoff oder Wasser. Diese Treibmittel können dem zu schäumenden Material in komprimierter Form zugesetzt werden und dehnen sich während des Schäumvorgangs aufgrund verminderten Drucks und/oder der in der Schmelze vorherrschenden erhöhten Temperatur unter Schäumung aus.

Üblicherweise diffundieren physikalische Treibmittel während des Schäumens beziehungsweise des darauffolgenden Abkühlens vollständig aus dem erhaltenen Produkt heraus und hinterlassen keine Rückstände. Sofern im geringen Ausmaß Rückstände verbleiben, sind diese aufgrund der Naturidentität des Treibmittels unkritisch.

Gegenüber dem Einsatz von chemischen Treibmitteln hat der erfindungsgemäße Einsatz von physikalischen Treibmitteln zudem den Vorteil, dass ein geschlossenporiges Produkt erhalten wird, mit einer dichten und geschlossen porigen Außenhaut und geschlossenen Poren im Innern, das beim konventionellen chemischen Schäumen nicht ohne Weiteres erreicht werden kann.

Zudem hat der Einsatz von physikalischen Treibmitteln den Vorteil, dass die Schmelze bei ihrer Idealtemperatur verarbeitet werden kann und nicht wie beim chemischen Treibmitteln eine Aktivierungstemperatur vorgegeben werden muss, die die Zersetzung des chemischen Treibmittels initiiert und die üblicherweise höher als die erforderliche Schmelzentemperatur liegt.

Darüber hinaus entzieht die Expansion beziehungsweise Aggregatumwandlung des physikalischen Treibmittels der Umgebung Wärme, so dass eine schnellere Abkühlung und damit kürzere Zykluszeiten beziehungsweise im Falle der Extrusion höhere Abzugsgeschwindigkeiten (mehr Meter beziehungsweise mehr Artikel pro Zeiteinheit) erreicht werden können. Ein übermäßiges Schäumen beziehungsweise Nachblähen wie bei den chemischen Treibmitteln findet nicht statt.

Damit der Verschluss eine ausreichende Dichtigkeit aufweist, ist es erforderlich, dass er fest und eng an der Innenwand des Flaschenhalses anliegt. Um ein ausreichend festes, dichtes Anliegen zu gewährleisten, sollte das Verschlussmaterial nicht zu hart sein, so dass es beim Einführen in den Flaschenhals etwas komprimierbar ist. Der durch die Kompression ausgeübte Druck führt zu einem dichten Verschluss.

Erfindungsgemäß wird daher als Material für den Verschluss ein schäumbares Material mit einer gewissen Elastizität wie thermoplastische Elastomere petrochemischer Herkunft verwendet.

Das erfindungsgemäße Verfahren der Schäumung mit physikalischen Treibmitteln eignet sich auch besonders für nachwachsende Rohstoffe, wobei biologisch abbaubare Rohstoffe bevorzugt sind. Aus Gründen der besseren Dichtigkeit sollten auch diese Rohstoffe nur eine Härte aufweisen, die der der thermplastischen Elastomere entspricht.

Beispiele für thermoplastische Elastomere sind Copolyester, Polyätherester, Polyäther-Block-Amide, Polyurethan (TPU), thermoplatische Polyblends aus Polypropylen und Ethylen-Propylen-Terpolymer oder Nitrilkautschuke, Styrol-Block-Copolymere, wie zum Beispiel Styrol-Ethylen/Butylen-Styrol, Styrol-Ethylen/Propylen-Styrol und Styrol-Butadien-Styrol, Ethylen-Vinyl-Acetat-Polymere sowie auf den vorgenannten Werkstoffgruppen basierende Blends, wobei SEBS (Styrol-Ethylen/Butylen-Stirol Block-Copolymer) besonders bevorzugt ist. Es können auch Polymere auf Basis von Silikon eingesetzt werden.

Beispiele für nachwachsende und vorzugsweise biologisch abbaubare Materialien sind Stärkeester und cellulosebasierte Polymere.

Geeignete Härtegrade zur Erzielung einer ausreichenden Dichtigkeit liegen vorzugsweise in einem Bereich von Shore A 65 bis A 90. Polypropylen, wie es zum Beispiel in der DE 198 49 149 A1 verwendet wird, hat dagegen einen Härtegrad von Shore D > 60.

Erfindungsgemäß können übliche Spritzgießverfahren oder Extrudierverfahren eingesetzt werden, wie sie vielfach für die verschiedenen Anwendungszwecke eingesetzt werden und auch für das chemische Schäumen bekannt sind.

Beispielsweise kann das Extrudieren der erfindungsgemäßen Verschlüsse mit physikalischen Treibmitteln analog dem Extrudieren von Dichtungselementen erfolgen, wie es bereits im Automobilbau mit thermoplastischen Elastomeren und Wasser als physikalischem Treibmedium angewandt wird.

Vorzugsweise wird für die Herstellung von Verschlüssen für höherwertige Produkte das Spritzgussverfahren eingesetzt, da üblicherweise die Oberflächen von spritzgegossenen Artikeln im Bezug auf die Geschlossenporigkeit eine bessere Qualität aufweisen als entsprechend erhaltene Artikel mit dem Extrusionsverfahren.

Der erfindungsgemäße Verschluss weist eine ungeschäumte Außenhaut und einen geschäumten Kern auf.

Hierbei wird der Form zunächst ein erster Teil Schmelze ohne Treibmittel und anschließend ein zweiter Teil mit Treibmittel zugesetzt. Bei Bedarf kann noch ein dritter Teil ohne Treibmittel zugesetzt werden. Verfahren zur Herstellung von Spritzgussartikeln mit ungeschäumter Haut und geschäumtem Kern sind an sich bekannt und können für den erfindungsgemäßen Zweck eingesetzt werden. Ein Beispiel für ein derartiges Verfahren ist in der internationalen Patentanmeldung WO 00/54952 beschrieben.

Der erfindungsgemäße physikalisch geschäumte korkenähnliche Verschluss kann vorteilhaft als Ersatz für natürliche Korken für Wein, Sekt und Spirituosen oder als Stöpsel eingesetzt werden.

## Patentansprüche

1. Verfahren zur Herstellung eines Verschlusses für flaschenartige Behältnisse,
**dadurch gekennzeichnet,**
**dass** der Verschluss durch Schäumen eines schäumbaren Ausgangsmaterials, ausgewählt unter einem thermoplastischen Elastomer oder einem nachwachsenden Rohstoff, erhalten wird, wobei zur Schäumung ein physikalisches Treibmittel eingesetzt wird, das ausgewählt ist unter Kohlendioxid, Stickstoff und Wasser, und der Verschluss eine ungeschäumte Außenhaut aus treibmittelfreiem Ausgangsmaterial und einen geschäumten geschlossenporigen Kern aufweist.

2. Verfahren nach Anspruch 1,
**dadurch gekennzeichnet,**
**dass** für die Herstellung ein Spritzgießverfahren oder ein Extrusionsverfahren eingesetzt wird.

3. Geschäumter Verschluss für flaschenartige Behältnisse, erhalten nach einem der vorhergehenden Ansprüche,
**dadurch gekennzeichnet,**
**dass** der Verschluss eine ungeschäumte Außenhaut aus treibmittelfreiem Ausgangsmaterial und einen geschäumten geschlossenporigen Kern aufweist.

4. Verwendung eines nach einem der Ansprüche 1 oder 2 erhaltenen Verschlusses als Korken oder Stöpsel für Flaschen.

## Claims

1. A method of manufacturing a closure member for bottle-like containters,
**characterized in that**
the closure member is obtained by foaming a foamable starting material selected from a thermoplastic elastomer or a renewable raw material, wherein a physical foaming agent is utilised for the foaming process, said physical foaming agent selected from carbon dioxide, nitrogen, and water, and said closure member comprising a non-foamed outer skin made of a starting material not including a foaming agent and a foamed closed-pore core.

2. A method in accordance with claim 1 **characterized in that**
an injection moulding process or an extrusion process is utilized for the manufacturing process.

3. A foamed closure member for bottle-like containers obtained in accordance with any of the preceding claims,
**characterized in that** the closure member comprises a non-foamed outer skin made of starting material not including a foaming agent and a foamed closed-pore core.

4. The use of a closure member obtained in accordance with any of the claims 1 or 2 as corks or stoppers for bottles.

## Revendications

1. Procédé de fabrication d'une fermeture pour contenants de type bouteille,
**caractérisé en ce que**
la fermeture est obtenue en faisant mousser un matériau de base expansible, choisi parmi un élastomère thermoplastique ou une matière première à dilatation ultérieure, sachant que pour le moussage, on insère un produit moussant physique, qui est sélectionné parmi du dioxyde de carbone, de l'azote et de l'eau et la fermeture présente une enveloppe extérieure non expansée en matériau de base sans produit moussant et un noyau expansé à pores fermés.

2. Procédé selon la revendication 1,
**caractérisé en ce que**
un moulage par injection ou un moulage par extrusion est utilisé pour la fabrication.

3. Fermeture expansée pour contenants de type bouteille obtenue selon l'une quelconque des revendications précédentes,
**caractérisée en ce que**
la fermeture présente une enveloppe extérieure en matériau de base sans produit moussant et un noyau expansé à pores fermés.

4. Utilisation d'une fermeture obtenue selon l'une quelconque des revendications 1 ou 2 comme bouchon ou obturateur pour bouteilles.
